# EUROPEAN PATENT APPLICATION

(11) **EP 2 560 422 A1**
(43) Date of publication of application: **20.02.2013**
(21) Application number: 12004982.0
(22) Date of filing: 05.07.2012
(51) Int. Cl.: H04W 8/00, G06F 17/30

(54) **Media sharing method and non-transitory machine readable media thereof**

(30) Priority: 05.07.2011 US 201161504317 P; 13.06.2012 US 201213517540
(71) Applicant: HTC Corporation, Taoyuan County 330 (TW)
(72) Inventor: Liu. Te-Chuan, Taoyuan City County 330 (TW); Chen, Li-Hui, Taoyuan City County 330 (TW); Lin, Jen-Chiun, Taoyuan City County 330 (TW); Jan, Cheng-Shiun, Taoyuan City County 330 (TW)
(74) Representative: Wagner & Geyer

(57) **Abstract**

By merging media playlists of mobile electronic devices capable of responding to each other and sharing a same wireless communication protocol, each of the mobile electronic devices is capable of sharing media playlists and corresponding media files with each other.

## Description

### Cross Reference To Related Applications

This application claims priority of US Provisional Application No. 61/504,317 filed on July 4, 2011.

### Background of the Invention

### 1. Field of the Invention

The present invention relates to a media sharing method and a non-transitory machine readable media thereof, and more particularly, to a media sharing method using a wireless communication protocol and a non-transitory machine readable media thereof.

### 2. Description of the Prior Art

In general, conventional portable digital media players ("DMPs"), which are also mobile electronic devices, are capable of allowing their users to (a) transfer compressed media files from a computer to the mobile electronic device by using an associated transfer management program installed on the computer and utilized for establishing a physical connection to the computer, where the physical connection could be a USB cable; (b) store the compressed media files in a non-volatile memory; (c) decode the compressed media files for playback according to various compression algorithms; (d) convert a compressed or uncompressed digital file to an analog stream, and potentially process signals of the analog stream to enhance audio and video of the analog file; (e) process and amplify the signals of the analog stream; and (f) produce high-fidelity audio and video, which may be played, paused, fast-forwarded, rewound, skipped or replayed instantly and on-demand.

Also, typically in the case of audio DMPs (e.g., the "iPod Nano"), the mobile electronic device may include a relatively small digital display window that provides information regarding the audio files stored on the mobile electronic device, where the information may include a song title or an artist name. The mobile electronic device may also be utilized for viewing (or modifying) a sequence of audio files currently stored on the mobile electronic device.

However, data transfer and advanced sorting/sequencing of audio/video selections are difficult or impossible for a user to accomplish unless the DMP is connected to the computer, which does not allow the user to insert new content or make other desirable modifications to original contents stored on the DMP, such as modifying the sequence of the audio/video selections stored on the device while the player device is not physically connected to the computer. Moreover, non-technical users of the audio/video players are usually restricted from creating, editing and managing custom "playlists" (i.e., fixed song sequences), where a user is usually allowed by the mobile electronic device to develop and use a variety of customized playlists.

Also disadvantageously, the display and user interface on the mobile electronic device are typically limited in size, including the use of multi-functional buttons which are complex for many users and/or are not touch-sensitive, thereby discouraging non-expert users from viewing, modifying, and even sharing the playlists and the sequence of audio files stored on the DMP.

### Summary of the Invention

The claimed invention discloses a media sharing method using a wireless communication protocol. The media sharing method comprises broadcasting a polling signal based on a wireless communication protocol by a first mobile electronic device; confirming, by the first mobile electronic device, whether there is a second mobile electronic device using the wireless communication protocol by receiving a response signal, which is in response to the polling signal, from the second mobile electronic device; merging a media playlist of the second mobile electronic device into a virtual media playlist of the first mobile electronic device when the first mobile electronic device receives the response signal; and accessing a media file by referring to the virtual media playlist by the first mobile electronic device.

The claimed invention further discloses a non-transitory machine readable media. The non-transitory machine readable media comprises computer code which when executed by a processor of the first mobile electronic device broadcasts a polling signal based on a wireless communication protocol by a first mobile electronic device, computer code which when executed by the processor confirms whether there is a second mobile electronic device using the wireless communication protocol by receiving a response signal, which is in response to the polling signal, from the second mobile electronic device; computer code which when executed by the processor merges a media playlist of the second mobile electronic device into a virtual media playlist of the first mobile electronic device when the first mobile electronic device receives the response signal; and computer code which when executed by the processor accesses a media file by referring to the virtual media playlist by the first mobile electronic device.

These and other objectives of the present invention will no doubt become obvious to those of ordinary skill in the art after reading the following detailed description of the preferred embodiment that is illustrated in the various figures and drawings.

### Brief Description of the Drawings

FIG. 1 illustrates a schematic diagram for illustrating how the media sharing method works on a mobile electronic device.
FIG. 2 illustrates the media sharing method according to one embodiment of the present invention.

### Detailed Description

The present invention discloses a virtual playlist/media file sharing method for facilitating users, which include non-expert users, to view, modify, and even share a playlist and a sequence of media files stored on his mobile electronic device utilizing a wireless communication protocol. In some embodiments of the present invention, the disclosed virtual playlist/media file sharing method is particularly useful for peer-to-peer wireless technologies which support the wireless communication protocol. Note that the wireless communication protocols utilized in the present invention may be based on near field communication (NFC), for example, Bluetooth, WiFi, or WiFi direct.

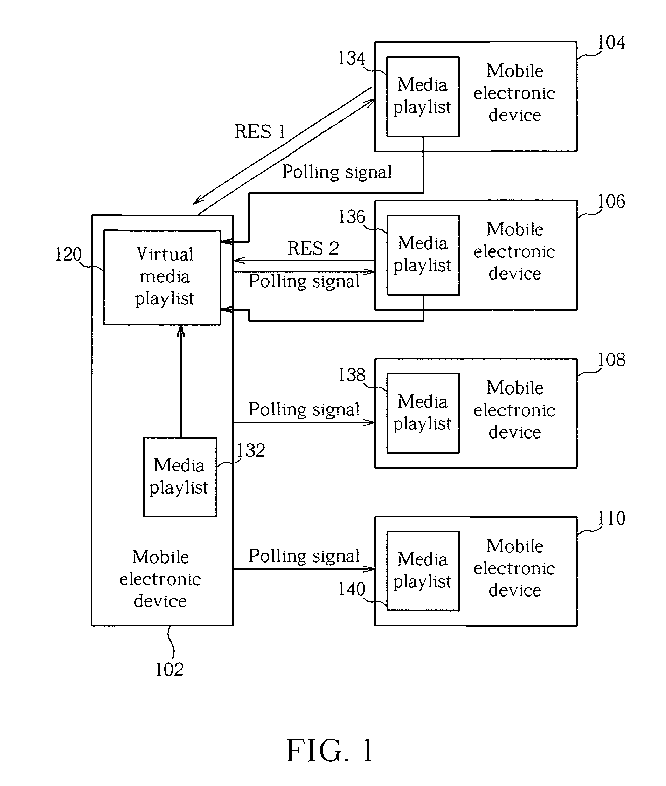

Please refer to FIG. 1, which illustrates a schematic diagram for illustrating how the media sharing method works on a mobile electronic device. There are a plurality of mobile electronic devices 102, 104, 106, 108 and 110 for explaining the media sharing method of the present invention, where the mobile electronic devices 102, 104, 106, 108 and 110 respectively have media playlists 132, 134, 136, 138 and 140. The mobile electronic device 102 is configured to broadcast a polling signal based on a wireless communication protocol, such as the above-mentioned wireless communication protocols. The mobile electronic devices 104, 106, 108, and 110 are assumed to receive the polling signal, however, only the mobile electronic devices 104 and 106 are assumed to utilize the same wireless communication protocol that the mobile electronic device 102 utilizes. Therefore, each of the mobile electronic devices 104 and 106 responds the mobile electronic device 102 with a response signal RES1 or RES2.

In embodiments of the present invention, since the wireless communication protocol is based on near field communication, some other mobile electronic devices utilizing the wireless communication protocol and falling outside of the capability of the mobile electronic device 102 in broadcasting the polling signal will not receive nor respond to the polling signal.

After receiving the response signals RES1 and RES2, the mobile electronic device 102 is able to confirm existence of both the mobile electronic devices 104 and 106.

It is assumed that a user of the mobile electronic device 102 intends to access media files from at least one of the mobile electronic devices 104, 106, 108 and 110. With the aid of the disclosed media sharing method, a virtual media playlist can be generated between a group of mobile electronic devices capable of responding to each other, and each member of the group of mobile electronic devices is capable of accessing media files of other members by referencing the virtual media playlist.

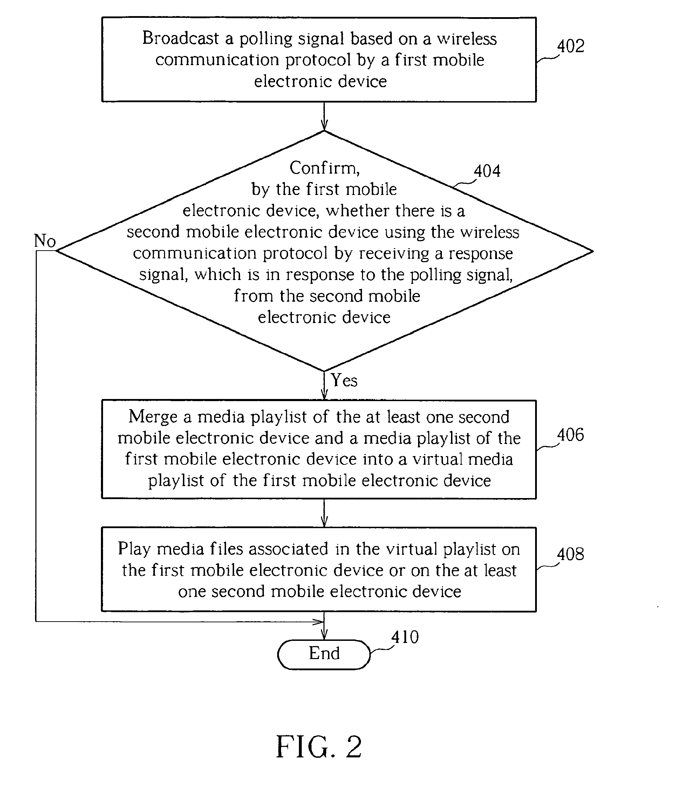

Please refer to FIG. 2, which illustrates the media sharing method according to one embodiment of the present invention. FIG. 2 includes steps as follows:
- Step 402:: Broadcast a polling signal based on a wireless communication protocol by a first mobile electronic device.
- Step 404:: Confirm, by the first mobile electronic device, whether there is a second mobile electronic device using the wireless communication protocol by receiving a response signal, which is in response to the polling signal, from the second mobile electronic device; when there is the at least one second mobile electronic device using the wireless communication protocol is confirmed, go to Step 406; else, go to Step 412.
- Step 406:: Merge a media playlist of the at least one second mobile electronic device and a media playlist of the first mobile electronic device into a virtual media playlist of the first mobile electronic device, and go to Step 408.
- Step 408:: Play media files associated in the virtual playlist on the first mobile electronic device or on the at least one second mobile electronic device, and go to Step 410.
- Step 410:: End.

The media sharing method shown in FIG. 2 will be explained with the aid of mobile electronic devices shown in FIG. 1. Note that the first mobile electronic device mentioned in the steps of FIG. 2 may indicate the mobile electronic device 102 shown in FIG. 1, and the at least one second mobile electronic device mentioned in the steps shown in FIG. 2 may indicate at least one of the mobile electronic devices 104, 106, 108 and 110.

In Step 402, when the user of the mobile electronic device 102 intends to access media files from other nearby mobile electronic devices, the wireless communication protocol installed on the mobile electronic device 102 is activated. The mobile electronic device 102 broadcasts a polling signal. Then in Step 404, the mobile electronic device 102 confirms whether there is at least one mobile electronic device issuing response signals in response to the polling signal and utilizing the same wireless communication protocol as the mobile electronic device 102 utilizes. According to the above-mentioned assumption, both the mobile electronic devices 104 and 106 will be confirmed by the mobile electronic device 102. Note that in the embodiment shown in FIG. 2, if the mobile electronic device 102 has the wireless communication protocol activated, it means the mobile electronic device 102 has authorized the mobile electronic devices 104 and 106 to access respective multimedia files/lists with each other. As for the mobile electronic devices 108 and 110, although they receive the polling signal, since the wireless communication protocol is not utilized on both the mobile electronic devices 108 and 110, both the mobile electronic devices 108 and 110 will not be granted to access multimedia files/lists with the mobile electronic device 102, 104, and 106.

Therefore, a virtual media playlist 120 including playlists 132, 134, and 136 respectively transmitted by the mobile electronic devices 102, 104 and 106 can be generated on the mobile electronic device 102 by merging the playlists 132, 134, and 136, as indicated by Step 406.

In Step 408, since the virtual media playlist 120 is generated on the mobile electronic device 102, the mobile electronic device 102 is capable of tracing media files listed by the virtual media playlist 120. For example, when the user of the mobile electronic device 102 sees an index of a preferred media file listed on the virtual media playlist 120, where the preferred media file substantially exists in the mobile electronic device 104 now, the user is allowed to issue an instruction via the virtual media playlist to track and play the preferred media file. Note that the preferred media file may include audio files/streams, video files/streams, and/or even digital photos.

In one embodiment of the present invention, the virtual media playlist may include a plurality of multimedia categories of media files. The user of the mobile electronic device 102 is able to pick one preferred category of multimedia files for sharing, and so do users of the mobile electronic devices 104 and 106.

The preferred media file can be played, i.e., accessed, on either one of the mobile electronic device 102 or the mobile electronic device 104. If the preferred media file is to be played on the mobile electronic device 102, the preferred media file will be transmitted from the mobile electronic device 104 to the mobile electronic device 102 in advance. Note that the transmission of the preferred media file from the mobile electronic device 104 to the mobile electronic device 102 can be implemented by downloading, caching, or copying. Else, if the preferred media file is to be played on the mobile electronic device 104, the transmission of the preferred media file from the mobile electronic device 104 to the mobile electronic device 102 can be neglected.

In Step 410, when a media file stored in one of the at least one nearby mobile electronic device is browsed on the virtual playlist, the media file may be downloaded, cached, or copied from the at least one nearby mobile electronic device to be played on the first mobile electronic device, or may be directly played by the nearby mobile electronic device storing said media file.

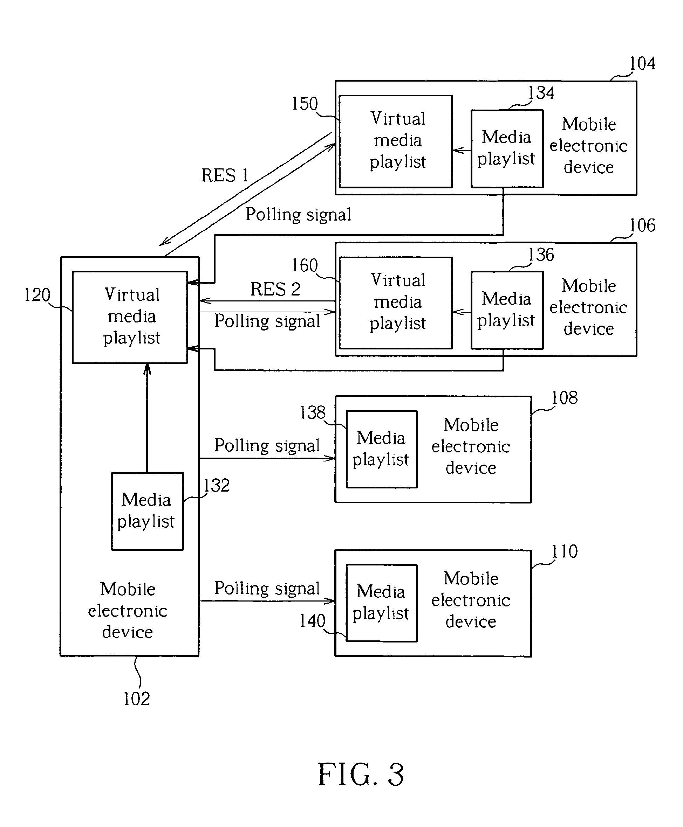

If a user of any one of the mobile electronic devices 104 and 106 intends to access a media file stored in the mobile electronic device 102, the user is also able to access the media file via a virtual media playlist generated on his mobile electronic device, similar as the user of the mobile electronic device 102 is allowed to. Please refer to FIG. 3, which illustrates how the mobile electronic device 104 or 106 works when either one the mobile electronic devices 104 and 106 may also generate a virtual media playlist itself according to one embodiment of the present invention. As shown in FIG. 3, the mobile media electronic device 104 may update its own virtual media playlist 150 by merging original contents of the virtual media playlist 150, which may include contents of the media playlist 134, with contents of the media playlist 132 and/or the media playlist 136; similarly, the mobile media electronic device 106 may update its own virtual media playlist 160 by merging original contents of the virtual media playlist 160, which may include contents of the media playlist 136, with contents of the media playlist 132 and/or the media playlist 134. Therefore, when the user of the mobile electronic device 104 intends to access a media file registered in the media playlist 132 or in the media playlist 136, besides accessing the virtual media playlist 120 or playing the media file on the mobile electronic device 102 as mentioned above, he or she may also download the media file from the mobile electronic device 102 or 106 to play said media file on the mobile electronic device 104 by using the virtual media playlist 150, where simultaneous downloading and playing on the mobile electronic device 104 may also be allowed according to one embodiment of the present invention; similarly, when the user of the mobile electronic device 106 intends to access a media file registered in the media playlist 132 or in the media playlist 134, besides accessing the virtual media playlist 120 as mentioned above, he or she may also download the media file from the mobile electronic device 102 or 104 to play said media file on the mobile electronic device 106 by using the virtual media playlist 160, where simultaneous downloading and playing on the mobile electronic device 106 may also be allowed according to one embodiment of the present invention. How the virtual media playlist 150 is utilized on the mobile electronic device 104 or how the virtual media playlist 160 is utilized on the mobile electronic device 106 is similar as how the virtual media playlist 120 is utilized on the mobile electronic device 102 as mentioned above.

The present invention discloses a media sharing method using a wireless communication protocol. With the aid of the media sharing method, mobile electronic devices capable of responding to each other and utilizing a same wireless communication protocol are capable of sharing media playlists and corresponding media files with each other. Note that the wireless communication protocol is preferably suitable for peer-to-peer wireless communication technologies, or near field communication.

A non-transitory machine readable media may be utilized for storing computer codes programmed according to the media sharing method of the present invention, such as the media sharing method disclosed in FIGs. 1-2, so that the stored computer codes may be run by a processor of any kind of mobile electronic device to fulfill the purpose of the present invention.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A media sharing method using a wireless communication protocol, comprising:
broadcasting a polling signal based on a wireless communication protocol by a first mobile electronic device;
confirming, by the first mobile electronic device, whether there is a second mobile electronic device using the wireless communication protocol by receiving a response signal, which is in response to the polling signal, from the second mobile electronic device;merging a media playlist of the second mobile electronic device into a virtual media playlist of the first mobile electronic device when the first mobile electronic device receives the response signal; and accessing a first media file by referring to the virtual media playlist by the first mobile electronic device.

2. The media sharing method of claim 1 further comprising merging a media playlist of the first mobile electronic device into the virtual media playlist of the first mobile electronic device.

3. The media sharing method of claim 1 further comprising:
selecting the second mobile electronic device to issue a request to access to the media playlist of the second mobile electronic mobile device; and
receiving by the first mobile electronic device an authorization from the second mobile electronic device for authorizing the access to the media playlist of the second mobile electronic mobile device.

4. The media sharing method of claim 1 further comprising the second mobile electronic device transmitting the media playlist of the second mobile electronic mobile device to the first electronic mobile device by using the wireless communication protocol.

5. The media sharing method of claim 4 further comprising:
the first mobile electronic device tracking the first media file on the second mobile electronic device according to the virtual media playlist; and
the second mobile electronic device transmitting the first media file to the first electronic mobile device by using the wireless communication protocol.

6. The media sharing method of claim 1 further comprising the first mobile electronic device transmitting the media playlist of the first mobile electronic mobile device to the second electronic mobile device by using the wireless communication protocol.

7. The media sharing method of claim 6 further comprising:
tracking the first media file on the first mobile electronic device by the second mobile electronic device according to the virtual media playlist; and
the second mobile electronic device transmitting the first media file to the first electronic mobile device by using the wireless communication protocol.

8. The media sharing method of claim 6 further comprising the second mobile electronic device merging the media playlist of the first mobile electronic device with a virtual media playlist of the second mobile electronic device.

9. The media sharing method of claim 8 further comprising:
accessing a second media file on the first mobile electronic device by referring to the virtual media playlist of the second mobile electronic device by the second mobile electronic device.

10. The media sharing method of claim 1 further comprising:
activating the wireless communication protocol on the first mobile electronic device.

11. The media sharing method of claim 1 wherein the wireless communication protocol is based on Bluetooth, WiFi, or WiFi direct.

12. The media sharing method of claim 1 wherein the media file includes audio files/streams, video files/streams, and/or digital photos.

13. The media sharing method of claim 1 wherein accessing the media file by referring to the virtual media playlist by the first mobile electronic device comprises:
the first mobile electronic device picking up a category of multimedia files in the virtual media playlist;
wherein the media file is included in the category of multimedia files.

14. A non-transitory machine readable media comprising:
computer code which when executed by a processor of the first mobile electronic device broadcasts a polling signal based on a wireless communication protocol by a first mobile electronic device;
computer code which when executed by a processor confirms whether there is a second mobile electronic device using the wireless communication protocol by receiving a response signal, which is in response to the polling signal, from the second mobile electronic device;
computer code which when executed by the processor merges a media playlist of the second mobile electronic device into a virtual media playlist of the first mobile electronic device when the first mobile electronic device receives the response signal; and
computer code which when executed by the processor accesses a media file by referring to the virtual media playlist by the first mobile electronic device.
